# EUROPÄISCHE PATENTSCHRIFT

(11) **EP 1 702 794 B1**
(45) Veröffentlichungstag und Bekanntmachung des Hinweises auf die Patenterteilung: **29.04.2009**
(21) Anmeldenummer: 06005458.2
(22) Anmeldetag: 17.03.2006
(51) Int. Cl.: B60Q 1/04, B62D 25/08, B60R 21/34

(54) **Kraftfahrzeugkarosserie mit einem Scheinwerfer**
Vehicle body with a headlamp
Carrosserie de véhicule avec un projecteur

(30) Priorität: 19.03.2005 DE 102005012760
(43) Veröffentlichungstag der Anmeldung: 20.09.2006
(73) Patentinhaber: GM Global Technology Operations, Inc., Detroit, MI 48265-3000 (US)
(72) Erfinder: Kerkeling, Christoph, 55118 Mainz (DE); Kistinger, Thomas, 64347 Griesheim (DE); Thompson, Grace-Mary, 65428 Rüsselheim (DE); Wanke, Thomas, 55239 Gau-Odernheim (DE)
(74) Vertreter: Strauss, Peter

(56) Entgegenhaltungen:
- EP-A- 1 127 739
- DE-A1- 10 030 373
- US-A1- 2004 125 584
- PATENT ABSTRACTS OF JAPAN Bd. 2000, Nr. 13, 5. Februar 2001 (2001-02-05) -& JP 2000 280816 A (MITSUBISHI MOTORS CORP), 10. Oktober 2000 (2000-10-10)

## Beschreibung

Die vorliegende Erfindung betrifft eine Kraftfahrzeugkarosserie mit einem Rahmen und wenigstens einem an dem Rahmen fixierten Scheinwerfer.

Der Rahmen, der die Außenteile der Karosserie trägt, muss steif sein, um Lasten tragen und im Falle eines Unfalls die Fahrzeuginsassen schützen zu können. Um den Schutz eines angefahrenen Fußgängers bei einem Unfall zu verbessern, sind in letzter Zeit erhebliche Anstrengungen unternommen worden, die Außenteile der Karosserie nachgiebig zu gestalten, so dass diese sich unter dem Aufprall des Fußgängers verformen und ihn langsam verzögern können, bevor es zu einem Kontakt mit dem darunter liegenden Rahmen, dem Motorblock oder anderen nicht nachgiebigen Teilen des Fahrzeugs kommt.

Um den für die Verzögerung des Fußgängers zur Verfügung stehenden Verformungsweg zu vergrößern, sind beispielsweise Motorhauben vorgeschlagen worden, die bei einem Unfall automatisch angehoben werden, um den Abstand zwischen Haube und Motorblock zu vergrößern. Diese Maßnahme ist natürlich nur dann wirksam, wenn der Fußgänger auch auf die Haube auftrifft. Häufig sind jedoch auch Unfallsituationen, bei denen ein Fußgänger nicht frontal angefahren wird, sondern nur mit einer Ecke der Frontpartie des Fahrzeugs in Berührung kommt, so z. B., wenn der Fahrer dem Fußgänger auszuweichen versucht, dies aber nicht gelingt. In einem solchen Fall stößt ein erwachsener Fußgänger häufig mit einem Oberschenkel oder ein Kind mit dem Kopf oder Oberkörper gegen einen Scheinwerfer des Fahrzeugs. Um auch in einem solchen Fall einen Verformungsweg bereit zu stellen und den Fußgänger zu verzögern, sind zahlreiche Typen von Scheinwerfern vorgeschlagen worden, bei denen das Gehäuse stauchbar ist oder Sollbruchstellen aufweist, so dass die Streuscheibe des Scheinwerfers, die mit dem Fußgänger unmittelbar in Berührung kommt, ins Innere der Fahrzeugkarosserie zurückweichen kann.

So beschreibt z. B. JP 2000 280816 einen Kraftfahrzeugscheinwerfer, der in einer Karosserie um einen seinem vorderen unteren Rand benachbarten Bolzen schwenkbar ist, um einem schräg von vorn und von oben kommenden Aufschlag ausweichen zu können. Einem horizontal von vorn kommenden Aufschlag kann der Scheinwerfer nicht ausweichen.

US 2004/0125584A1 beschreibt einen in einer Karosserie über zerstörbare Halter aufgehängten Scheinwerfer, bei dem die Zerstörung der Halter ein Zurückweichen des Scheinwerfers in horizontaler Richtung ermöglicht. Je mehr die Richtung eines Aufschlags von der Zurückweichrichtung abweicht, um so höher ist die zum Zerstören der Halter erforderliche Wucht des Aufschlags.

Aus DE 100 30 373 A1 ist eine Befestigungsvorrichtung für einen Kraftfahrzeugscheinwerfer bekannt, bei der der Scheinwerfer in einem Hohlraum nachgiebig, insbesondere durch einen Federbalg, gehalten ist, um im Falle eines leichten Zusammenstoßes den Scheinwerfer vor Beschädigung zu schützen. Der Federbalg soll anstelle von zerstörbaren Haltern eingesetzt werden, die nach einem Zusammenstoß ersetzt werden müssen.

EP 1 127 739 B1 offenbart eine Kraftfahrzeugkarosserie nach dem Oberbegriff des Anspruchs 1. Von mehreren zerstörbaren Haltern des Scheinwerfers soll bei einem Aufprall nur ein dem Aufprallpunkt benachbarter Halter zerstört werden, und ein weiter entfernter, unbeschädigt gebliebener Halter dient als Angelpunkt für eine Schwenkbewegung des Scheinwerfers.

Aufgabe der vorliegenden Erfindung ist, eine Kraftfahrzeugkarosserie zu schaffen, die in einem kompakten Aufbau ein Zurückweichen des Scheinwerfers bei einem Aufprall ermöglicht

Die Aufgabe wird gelöst durch eine Kraftfahrzeugkarosserie nach Anspruch 1. Unteransprüche sind auf vorteilhafte Weiterbildungen der Erfindung gerichtet..

Um die Stellung des Scheinwerfers an der Karosserie eindeutig festzulegen, reichen drei Halter aus.

Es kann auch vorgesehen werden, dass wenigstens einer der Halter unter Kraftaufwand verformbar ist, sei es anstatt zu brechen oder bevor er bricht, um durch die Verformung des Halters dem Fußgänger kontinuierlich Aufprallenergie zu entziehen.

Um sicher zu stellen, dass der Verdrängung des Scheinwerfers auch dann noch eine verzögernde Kraft entgegenwirkt, wenn alle Halter zerstört sind, kann in der Aussparung ein durch Verdrängen des Scheinwerfers deformierbares Element vorgesehen sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht eines Kraftfahrzeugs;
- Fig. 2: eine vergrößerte Ansicht eines Scheinwerfers des Kraftfahrzeugs;
- Fig. 3: einen schematischen Schnitt durch den Scheinwerfer und ihn umgebende Teile der Karosserie im intakten Zustand gemäß einer nicht erfindungsgemäßen Ausgestaltung;
- Fig. 4: den Scheinwerfer aus Fig. 3 in verdrängter Stellung;
- Fig. 5: einen schematischen Schnitt durch den Scheinwerfer und dessen Umgebung im intakten Zustand gemäß einer erfindungsgemäßen Ausgestaltung;
- Fig. 6: den Scheinwerfer aus Fig. 5 in verdrängter Stellung;
- Fig. 7: einen zu Fig. 3 und Fig. 5 analogen Schnitt gemäß einer zweiten Ausgestaltung der Erfindung; und
- Fig. 8: den verdrängten Scheinwerfer und dessen Umgebung gemäß der zweiten Ausgestaltung;

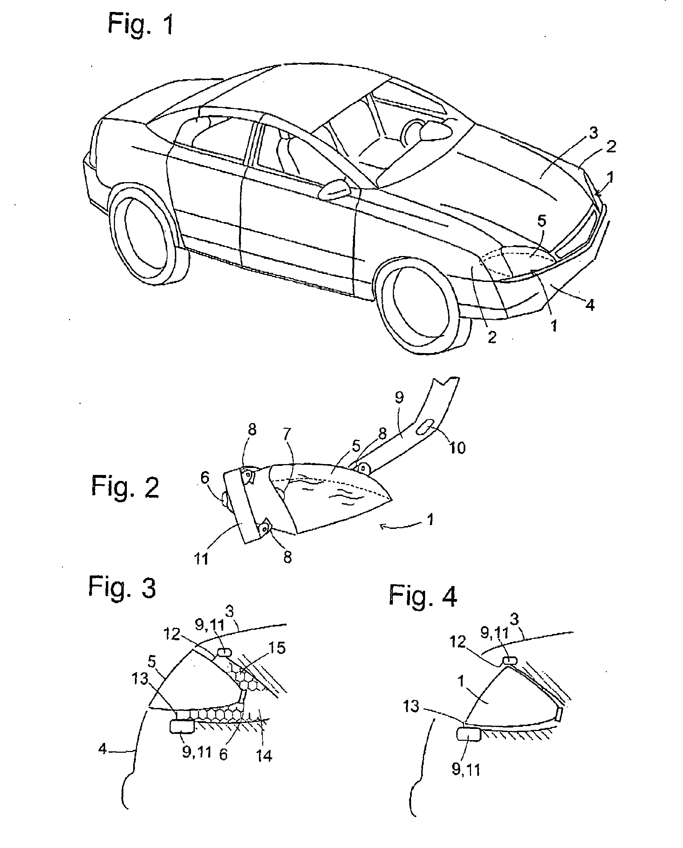

Die Frontscheinwerfer 1 des in Fig. 1 gezeigten Kraftfahrzeugs haben eine in etwa dreieckige Streuscheibe 5, von der ein äußerer Rand jeweils an einen Kotflügel 2, ein oberer Rand an eine Haube 3 und ein unterer Rand an einen Stoßfänger 4 angrenzt. Die Umrisse des in das Karosserieinnere eingreifenden Gehäuses des Scheinwerfers 1 sind in Fig. 1 durch gestrichelte Linien angedeutet.

Fig. 2 zeigt den Scheinwerfer 1 für sich allein. Er hat in etwa die Gestalt eines ungleichmäßigen Tetraeders mit zum Teil abgerundeten Kanten, von dem die Streuscheibe 5 eine Fläche bildet. An der von der Streuscheibe 5 abgewandten Spitze des Tetraeders 6 befindet sich eine Leuchtmittelfassung 6, die entfernbar ist, um ein Leuchtmittel 7 aus dem Scheinwerfer zu entnehmen und auszutauschen. An den Seitenflächen des Tetraeders sind drei Laschen 8 angebracht, die mit Hilfe von Schrauben oder dergleichen an komplementären Laschen eines aus einem steifen Blech geformten Rahmenteils 9 verbunden sind, das in der Fig. 2 nur unvollständig gezeigt ist. Ein mittlerer Abschnitt dieses Rahmenteils 9, in dem eine Durchgrifföffnung 10 für ein Haubenschloss gebildet ist, erstreckt sich unterhalb des vorderen Randes der Motorhaube 3 und ist in Fig. 1 von dieser verdeckt. An den mittleren Abschnitt schließen sich zwei Bügel 12, 13 an, die sich um die Gehäuse der Scheinwerfer 1 herum erstrecken und an denen deren Laschen 8 befestigt sind.

Fig. 3 und 4 veranschaulichen die Wirkungsweise eines nicht erfindungsgemäßen Scheinwerfers anhand von zwei schematischen Schnitten. Fig. 3 zeigt einen Schnitt im intakten Zustand, in welchem die Streuscheibe 5 des Scheinwerfers 1 mit der angrenzenden Haube 3 und der äußeren Hülle des Stoßfängers 4 bündig ist. Zwei Halter zwischen dem Gehäuse des Scheinwerfers 1 und dem steifen Rahmenteil 9, die jeweils durch die miteinander verbundenen Laschen von Scheinwerfer und Rahmenteil gebildet sind, sind in Fig. 1 durch einfache Striche 12, 13 dargestellt. Im Inneren der Karosserie hinter dem Gehäuse des Scheinwerfers befindet sich eine Aussparung 14. Die Aussparung 14 ist nicht vollständig von begrenzenden Wänden umgeben; wenigstens in ihrem hinteren Bereich ist eine Öffnung gelassen, die es ermöglicht, vom Motorraum aus auf die Leuchtmittelfassung 6 zuzugreifen. Die Aussparung 14 ist teilweise mit einem durch Stauchung deformierbaren Material, z. B. einem Schaum 15 ausgefüllt.

Fig. 4 zeigt einen zu Fig. 3 analogen Schnitt nach einem Aufprall eines Fußgängers auf den Scheinwerfer 1. Die Halter 12, 13 sind sämtlich zerstört, und der Scheinwerfer ist als Ganzes in die Aussparung 14 hinein zurückgedrängt. Während des Zurückdrängens des Scheinwerfers 1 wurde die Struktur des Schaums 15 kontinuierlich zerstört und dadurch der Aufprall des Fußgängers kontinuierlich abgebremst.

Die Zerstörung der Halter 12, 13 kann durch Brechen der die Laschen 8 des Scheinwerfers 1 und des Rahmenteils 9 verbindenden Schrauben oder durch Abrechen von Laschen vom Scheinwerfergehäuse oder dem Rahmenteil 9 erfolgen.

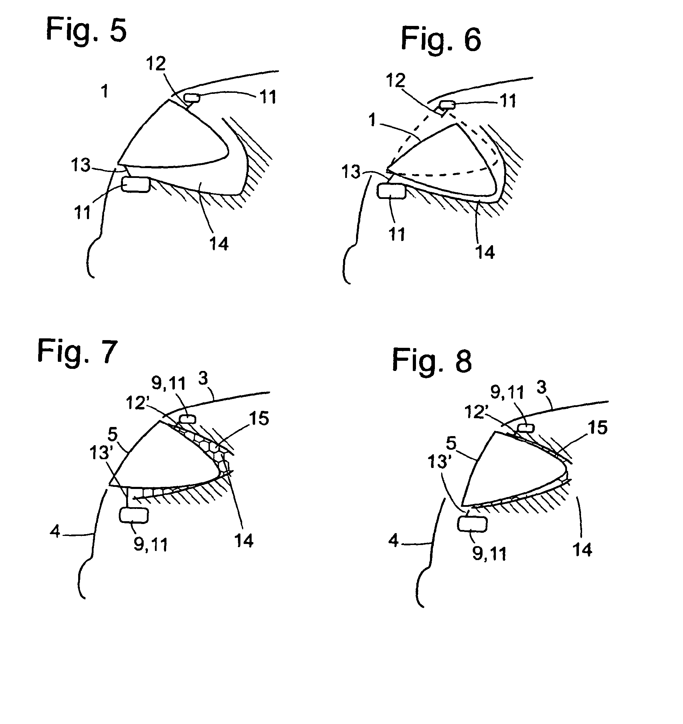

Eine Ausgestaltung der Erfindung ist in den Fig. 5 und 6 veranschaulicht, von denen wiederum Fig. 5 einen Schnitt durch den Scheinwerfer 1 und dessen Umgebung im intakten Zustand und Fig. 6 einen entsprechenden Schnitt nach Aufschlagen eines Fußgängers auf den Scheinwerfer 1 zeigt.

Von den in der Fig. gezeigten Haltern 12, 13 ist der obere 12 leichter zerstörbar als der untere 13, z. B., indem in dem oberen Halter 12 ein Niet mit Sollbruchstelle verwendet ist, und in dem unteren 13 nicht, oder indem einfach die Laschen des unteren Halters 13 länger und biegsamer als die des oberen 12 gemacht sind. Wenn ein Fußgänger auf den Scheinwerfer 1 aufschlägt, bricht der obere Halter 12, während der untere Halter 13 zunächst nachgibt, so dass der Scheinwerfer zunächst die in Fig. 6 als gestrichelter Umriss dargestellte Stellung erreicht. In dieser Stellung ist der untere Halter 13 nicht weiter verformbar, er ist jedoch noch nicht zerstört, und bildet daher einen Angelpunkt, um den herum der Scheinwerfer 1 abwärts in die Aussparung 14 hineinschwenkt. Diese Ausgestaltung ist daher insbesondere für eine Fahrzeugkarosserie geeignet, bei der Platz, in den der Scheinwerfer 1 bei einem Unfall verdrängt werden kann, in Fahrtrichtung hinter dem Scheinwerfer nicht ohne weiteres bereit gestellt werden kann.

Eine kontinuierliche Verzögerung des aufprallenden Fußgängers kann bei dieser Ausgestaltung dadurch erreicht werden, dass zum Verbiegen des intakt bleibenden unteren Halters 13 in allen Phasen der Verdrängungsbewegung des Scheinwerfers 1 Arbeit geleistet werden muss. Ergänzend kann selbstverständlich auch hier ein deformierbares Element wie etwa der oben erwähnte Schaum 15 in der Aussparung 14 vorgesehen sein.

Selbstverständlich könnte durch eine passende Wahl der Anordnung und Belastbarkeiten der Halter 12, 13 auch ein Schwenken des Scheinwerfers 1 nach oben oder in seitlicher Richtung erreicht werden, je nachdem, wo die Aussparung 13, die der Scheinwerfer 1 zum Ausweichen benötigt, am einfachsten bereitgestellt werden kann. So zeigen die Fig. 7 und 8 eine Ausgestaltung der Erfindung, bei der eine Aussparung 14, in die der Scheinwerfer bei einem Aufprall ausweichen kann, sich einerseits unterhalb und andererseits schräg nach oben versetzt hinter dem Scheinwerfer befindet. Bei dieser Ausgestaltung ist es der untere Halter 13' , der bei einem Aufprall als erster bricht, während der obere Halter 12' zunächst noch einen Angelpunkt bildet, der die Bewegung des Scheinwerfers 1 in die Aussparung 14 hinein führt. Vorteilhaft an dieser Ausgestaltung ist, dass der untere Rand der Streuscheibe 5, der als erstes mit dem Fußgänger zusammenstößt, ausweichen kann, so dass eine erste Verzögerung des Fußgängers bereits stattgefunden hat, bevor der schwerer zerstörbare obere Halter 12' maßgeblich belastet wird.

## Patentansprüche

1. Kraftfahrzeugkarosserie mit einem steifen Rahmen und wenigstens einem an dem Rahmen über eine Mehrzahl von zerstörbaren Haltern (12, 12', 13, 13') gehaltenen Scheinwerfer (1), wobei in dem Rahmen benachbart zu dem Scheinwerfer (1) eine Aussparung (14) freigelassen ist, in die der Scheinwerfer (1) unter Krafteinwirkung schwenkbar ist, **dadurch gekennzeichnet, dass** die mehreren Halter (12, 12', 13, 13') unterschiedlich schwer zerstörbar sind, und dass die Aussparung (14) in dem Rahmen so angeordnet ist, dass nach Zerstörung wenigstens eines leicht zerstörbaren Halters (12, 13') wenigstens ein schwer zerstörbarer Halter (13, 12') als Angelpunkt für die Schwenkbewegung des Scheinwerfers (1) in die Aussparung (14) dient.

2. Kraftfahrzeugkarosserie nach Anspruch 1, **dadurch gekennzeichnet, dass** die Zahl der Halter (12, 12', 13, 13') drei ist.

3. Kraftfahrzeugkarosserie nach einem der vorhergehenden Ansprüche, **dadurch gekennzeichnet, dass** wenigstens einer der Halter (13) unter Kraftaufwand verformbar ist.

4. Kraftfahrzeugkarosserie nach einem der vorhergehenden Ansprüche, **dadurch gekennzeichnet, dass** ein durch Verdrängen des Scheinwerfers (1) deformierbares Element (15) in der Aussparung (14) angeordnet ist.

5. Kraftfahrzeugkarosserie nach einem der vorhergehenden Ansprüche, **dadurch gekennzeichnet, dass** die Aussparung (14) quer zur Fahrtrichtung gegen den Scheinwerfer (1) versetzt ist, und dass von den mehreren Haltern (12, 13) einer (13), der an einer der Aussparung (14) benachbarten Seite des Scheinwerfers (1) angreift, schwerer zerstörbar oder verformbar ist als einer (12), der an einer von der Aussparung (14) entfernten Seite des Scheinwerfers (1) angreift.

## Claims

1. Vehicle body with an inflexible frame and equipped with at least one headlamp (1) carried by a certain number of destructible fasteners (12, 12', 13, 13') on the frame, wherein in the frame next to the headlamp (1) there is an opening (14) in which the headlamp (1) can be pivoted by the effect of a force, **characterized in that** the different fasteners (12, 12', 13, 13') are destructible on different levels, and that the opening (14) is arranged inside the frame so that after the destruction of at least one of the easily destructible fasteners (12, 13') at least one fastener difficult to be destructed serves as pivotal point for the pivoting of the headlamp (1) into the opening (14).

2. Vehicle body according to claim 1, **characterized in that** the number of fasteners (12, 12', 13, 13') is three.

3. Vehicle body according to claim 2, **characterized in that** at least one of the fasteners (13) can be deformed by the effect of a force.

4. Vehicle body according to one of the precedent claims, **characterized in that** an element (15) which can be deformed by displacing the headlamp (1) is arranged in the opening (14).

5. Vehicle body according to one of the precedent claims, **characterized in that** the opening (14) is diagonally shifted towards the driving direction against the headlamp (1) and that one (13) of the fasteners (12, 13) touching the opening (14) on the side of the headlamp (1) is more difficult to be destructed or deformed than a fastener (12) which touches a side of the headlamp (1) being further away from one of the openings (14).

## Revendications

1. Carrosserie du véhicule avec un châssis rigide et dont le cadre regorge de plusieurs supports destructibles (12, 12', 13,13') soutenant un projecteur (1), au voisinage duquel un emplacement (14) est laissé vide, dans lequel le projecteur (1) est orientable sous l'effet de la force exercée; ceci est **caractérisé en ce que** la majorité de supports (12,12', 13, 13') se détruisent de manière différente et que l'emplacement (14) est arrangé dans le cadre de telle sorte qu'après la destruction d'au moins un support facilement destructible (12, 13') au moins un support difficilement destructible (13,12') serve de centre pour la rotation du projecteur (1) dans l'emplacement (14).

2. Carrosserie du véhicule selon revendication 1, **caractérisée en ce que** le nombre des supports (12, 12',13, 13') est trois.

3. Carrosserie du véhicule selon une des revendications précédentes, **caractérisé en ce qu'**au moins un des supports (13) puisse se déformer sous les sollicitations de la force exercée.

4. Carrosserie du véhicule selon une des revendications précédentes, **caractérisée en ce que** un élément déformable (15) lors du déplacement du projecteur (1) soit classé dans l'emplacement (14).

5. Carrosserie selon une des revendications précédentes, **caractérisée en ce que** l'emplacement (14) est déplacé en travers dans le sens de destination contre le projecteur (1) et qu'un (13) parmi les supports (12, 13) dans l'emplacement (14) attaquant le côté voisin du projecteur (1), est plus destructible ou déformable que l'autre (12), placé du côté de l'emplacement (14) attaquant le côté éloigné du projecteur (1).
